# EUROPEAN PATENT SPECIFICATION

(11) **EP 4 654 084 B1**
(45) Date of publication and mention of the grant of the patent: **09.09.2026**
(21) Application number: 25177361.0
(22) Date of filing: 19.05.2025
(51) Int. Cl.: G06N 3/067, G06N 3/084

(54) **METHOD AND SYSTEM FOR ONLINE TRAINING OF INTELLIGENT OPTICAL COMPUTING**
VERFAHREN UND SYSTEM ZUM ONLINE-TRAINING INTELLIGENTER OPTISCHER BERECHNUNGEN
PROCÉDÉ ET SYSTÈME D'APPRENTISSAGE EN LIGNE D'INFORMATIQUE OPTIQUE INTELLIGENTE

(30) Priority: 20.05.2024 CN 202410623534
(43) Date of publication of application: 26.11.2025
(73) Proprietor: Tsinghua University, Beijing 100084 (CN)
(72) Inventor: Fang, Lu, Beijing, 100084 (CN); Xue, Zhiwei, Beijing, 100084 (CN); Zhou, Tiankuang, Beijing, 100084 (CN)
(74) Representative: Petraz, Gilberto Luigi

(56) References cited:
- ZHOU TIANKUANG ET AL: "In situ optical backpropagation training of diffractive optical neural networks", PHOTONICS RESEARCH, vol. 8, no. 6, 28 May 2020 (2020-05-28), US, pages 940 - 953, XP093118811, ISSN: 2327-9125, DOI: 10.1364/PRJ.389553
- SUNIL PAI ET AL: "Experimentally realized in situ backpropagation for deep learning in nanophotonic neural networks", ARXIV.ORG, CORNELL UNIVERSITY LIBRARY, 201 OLIN LIBRARY CORNELL UNIVERSITY ITHACA, NY 14853, 17 May 2022 (2022-05-17), XP091227463
- YINGJIE LI ET AL: "LightRidge: An End-to-end Agile Design Framework for Diffractive Optical Neural Networks", ARXIV.ORG, CORNELL UNIVERSITY LIBRARY, 201 OLIN LIBRARY CORNELL UNIVERSITY ITHACA, NY 14853, 3 October 2023 (2023-10-03), XP091629644
- JAMES SPALL ET AL: "Training neural networks with end-to-end optical backpropagation", ARXIV.ORG, CORNELL UNIVERSITY LIBRARY, 201 OLIN LIBRARY CORNELL UNIVERSITY ITHACA, NY 14853, 9 August 2023 (2023-08-09), XP091590698
- XUE ZHIWEI ET AL: "Fully forward mode training for optical neural networks", NATURE, vol. 632, no. 8024, 7 August 2024 (2024-08-07), London, pages 280 - 286, XP093205125, ISSN: 0028-0836, DOI: 10.1038/s41586-024-07687-4

## Description

### TECHNICAL FIELD

The present invention relates to the field of intelligent optical computing technologies, and particularly to a method and a system for online training of intelligent optical computing.

### BACKGROUND

In an era of unprecedented advances in information technologies, the quest for faster and more efficient computation methods has become a driving force of innovation. Among them, optical computing is a nontraditional computing paradigm, which utilizes the unique properties of light to perform computational tasks with advantages of ultra-high processing speeds, massive parallelism, and low power consumption. The attractiveness of the optical computing lies in utilizing inherent properties of light, such as speed, parallelism and coherence. Unlike a traditional electronic computer which relies on movement of electrons through semiconductor materials, the optical computing utilizes photons (particles of light) for computation. This paradigm shift opens up a new possibility for solving complex computational problems and promises to revolutionize fields ranging from communications and image processing to artificial intelligence and pattern recognition.

Additionally, more efficient and scalable training methods have been a pressing issue in the field of artificial intelligence and machine learning. The traditional electronic computing method suffers from slow speed, high energy consumption, and poor scalability, thus new alternative computing paradigms have begun to emerge, the most notable of which is the optical training. The optical training represents an emerging paradigm in machine learning which utilizes the unique properties of light to accelerate and enhance the training process. In contrast to traditional electronic computing, optical training utilizes photons (particles of light) to perform computational tasks. The method offers the advantages of ultra-high processing speed, tremendous parallelism, and low energy consumption, and thus has great potential for solving the increasingly complex challenges in modern artificial intelligence and machine learning.

Zhou et al. (2020), "In situ optical backpropagation training of diffractive optical neural networks", Photonics Research, vol. 8, no 6, pp. 940-953, discloses a free-space diffractive optical neural network trained in situ by implementing optical error backpropagation through cascaded spatial light modulators, wherein forward and backward propagated optical fields are measured for gradient calculation.

Pai et al. (2022), "Experimentally realized in situ backpropagation for deep learning in nanophotonic neural networks.", arXiv preprint arXiv:2205.08501v1, discloses an integrated silicon photonic neural network trained in situ by optical backpropagation, using Mach-Zehnder interferometer meshes with programmable phase shifters and optical power monitoring to measure gradients from interfering forward- and backward-propagating light.

### SUMMARY

The present invention aims to solve, at least to a certain extent, one of the technical problems in the related art.

To this end, the present invention proposes a method for online training of intelligent optical computing, for solving the current technical problem that an optical system's computation mainly relies on offline modeling and computation and requires a large amount of computational resources and accurate numerical models. The present invention is based on differentiable neural network parameters, and executes optical training on a specific physical system to complete the training process of the optical network in an efficient way.

The invention is defined by the appended independent claims. Further embodiments are defined by the appended dependent claims.

### BRIEF DESCRIPTION OF THE DRAWINGS

FIG. 1 is a flow chart of a method for online training of intelligent optical computing according to an embodiment of the present invention.
FIG. 2 is an architectural diagram of a free space system according to an embodiment of the present invention.
FIG. 3 is a flow chart of a method for online training of intelligent optical computing according to an embodiment of the present invention.
FIG. 4 is an architectural diagram of an integrated photonic chip system according to an embodiment of the present invention.
FIG. 5 is a structural schematic diagram of a system for online training of intelligent optical computing according to an embodiment of the present invention.
FIG. 6 is a structural schematic diagram of a system for online training of intelligent optical computing according to an embodiment of the present invention.

### DETAILED DESCRIPTION

It is noted that embodiments and features of the embodiments of the present invention may be combined with each other without conflict. The present invention will be explained in detail below in connection with the embodiments with reference to the accompanying drawings.

In order to enable those skilled in the art to better understand the aspects of the present invention, the embodiments of the present invention will now be clearly and fully described in combination with the accompanying drawings of the embodiments of the present invention.

A method and system for online training of intelligent optical computing according to the embodiments of the present invention are described below with reference to the drawings.

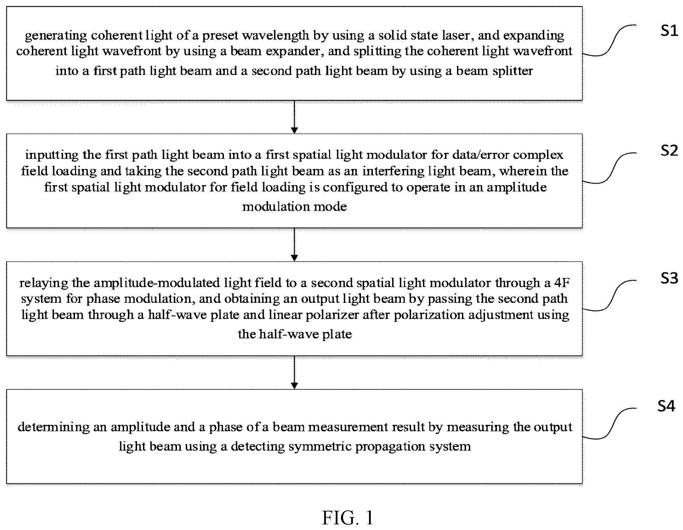

Referring to FIG. 1, which is a flow chart of a method for online training of intelligent optical computing according to an embodiment of the present invention.

As shown in FIG. 1, the method is applied to a free space system, and includes:
S1, generating coherent light of a predefined wavelength by using a solid state laser, and expanding coherent light wavefront by using a beam expander, and splitting the coherent light wavefront into a first path light beam and a second path light beam by using a beam splitter;
S2, inputting the first path light beam into a first spatial light modulator for data/error complex field loading and taking the second path light beam as an interfering light beam, wherein the first spatial light modulator for field loading is configured to operate in an amplitude modulation mode;
S3, relaying the amplitude-modulated light field to a second spatial light modulator through a 4F system for phase modulation, and obtaining an output light beam by passing the second path light beam through a half-wave plate and linear polarizer after polarization adjustment using the half-wave plate; and
S4, determining an amplitude and a phase of a beam measurement result by measuring the output light beam using a detecting symmetric propagation system.

It may be understood that the embodiments of the present invention realize efficient and highly accurate training of the optical system of the large-scale intelligent optical computing system. A prerequisite for realizing the optical training is dividing the system into a modulation region and a propagation region. In the modulation region, the refractive index may achieve various functions through electro-optical or plenoptical reconstruction, while in the propagation region, the refractive index remains fixed. This division provides the basic framework for the optical training, allowing parameters of the optical system to be flexibly tuned and optimized. Full-forward-mode gradient descent learning is one of the key methods for optical training. Unlike a traditional backpropagation-based method, the fully-forward-mode gradient descent learning does not require backpropagation of the light field; rather, the gradient with respect to the refractive index is computed by feeding the error field into the system and measuring the light field at the output. The advantage of this method is that the complex backpropagation process is avoided and the efficiency and stability of the training is improved.

It should be understood that basic elements of the free space optical system of the embodiments of the present invention are the refractive index, the gain and the loss, which may be summarized as the real and imaginary parts of the refractive index: n = *n_{R}* + *in_{I}* . Herein, the present invention will prove two conclusions. First, linear propagation of the optical system can be reformulated as a linearly connected neural network. Second, the neural network is differentiable and the system parameters can be designed by gradient descent.

Considering the optical system controlled by a Maxwell's equation, $\left(∇\times ∇\times -{μ}_{0}{ϵ}_{0}{ω}_{0}^{2}{ϵ}_{r}\right) E = - {jμ}_{0} {μ}_{r} {ω}_{0} J$ , where E is an electric field distribution, ***J*** is a current source , and *ε*₀, *εᵣ, µ*₀*,µᵣ,* are vacuum, relative permittivity, and magnetic permeability, respectively. The Maxwell's equation can be vectorized as *A*(*εᵣ*)***E** = µᵣ**J**.* Since the considered cases are formed with the same current source ***J***, the same input electric field ***Eᵢ***, and the same output electric field ***Eₒ***, which satisfy *Aⱼ**Eⱼ** = µᵣ**J*** and *Aₒ**Eₒ** = µᵣ**J**.* The present invention then proceeds to prove that in the linear system, there exists a pseudo-inverse matrix ${A}_{o}^{+}$ which makes ${A}_{o}^{+} {A}_{o} = I$, where ***I*** is a unit matrix.

Prove : let ***J*** ∈ *C^{Nⱼ}, **Eₒ*** ∈ *C^{Nₒ},* and ***jᵢ*** be an i-th one-hot vector with nonzero position, then *jᵢ* will be the base current source ***J** = **Σᵢ**αᵢ**jᵢ**.* For each ***jᵢ*** as a source of the system, denoting the output electric field distribution as ***eᵢ* (*****e**ᵢ* ∈ ***C^{Nₒ}***), which is *Aₒ**eᵢ** = **jᵢ***. Since the system is linear, outputting Eₒ = Σᵢαᵢeᵢ = [e₁, e₂, ... , e_{Nⱼ}] [α₁, α₂, ... , α_{Nⱼ}]^{T}, which shows Eₒ = [e₁, e₂, ... , e_{Nⱼ}]J. Comparing this with a control forward Maxwell's equation AₒEₒ = J, the present invention concludes that ${A}_{o}^{+} = \left[{e}_{1},{e}_{2},…,{e}_{{N}_{j}}\right]$ satisfying ${A}_{o}^{+} {A}_{o} = I$.

Substituting ${A}_{o}^{+} {A}_{o} = I$ into a set of Maxwell's equations for the input and output fields, the input field ***Eᵢ*** and the output field ***Eₒ*** can be connected by the following equation: ${E}_{o} = {A}_{o}^{+} {A}_{i} {E}_{i}$

In this case ${A}_{o}^{+}$ and *Aᵢ* are parameterized as *εᵣ*. It can be noted from the above that, the linear propagation of the light field depicts a linear layer connecting the input and output with a fully connected weight matrix $W \left({ϵ}_{r}\right) = {A}_{o}^{+} {A}_{i}$. The present invention further considers the gradient descent design of the parameters and the relaying between the layers. It is first noted that the wavefield is manipulated in two forms: modulation and coherent interference, where the modulation can be represented as point-by-point multiplication and the coherent interference can be represented as addition in a complex field. Considering the modulation process: ${E}_{i} = {E}_{i} ′ exp \left(j\sqrt{{ϵ}_{r}}\left(Δd\right)/λ\right) = {E}_{i} ′ exp \left(j\left({n}_{R}+{in}_{I}\right)\left(Δd\right)/λ\right)$ where *Δd* is a modulation distance, *λ* is a wavelength, and ***n_{R}**, **n_{I}*** are the real and imaginary parts of the refractive index. When combining the coherent reference beams, ${E}_{i}^{′} = \left({E}_{{i}_{0}}+{E}_{{i}_{ref}}\right)$. Therefore, the input field extends to Eᵢ = (E_{i₀} + E_{i_{ref}})exp(2πj(n_{R} + in_{I}) (Δd)/λ). The end-to-end embedded neural network is represented as $y = f \left(x; {n}_{R}; {n}_{I}; B\right) = W \left({n}_{R}^{\left(0\right)}, {n}_{I}^{\left(0\right)}\right) \left(M\left({n}_{R}^{\left(t\right)}, {n}_{I}^{\left(t\right)}\right)⋅\left(x+B\right)\right)$
where x = E_{i₀}, y = Eₒ, $M = exp \left(2πj\left({n}_{R}^{\left(t\right)}+{in}_{I}^{\left(t\right)}\right)\left(Δd\right)/λ\right)$, B = E_{i_{ref}} are mapped to the input, the output, the complex multiplication, and the bias weight in the neural network implementation, and ( ${n}_{R}^{\left(0\right)} , {n}_{I}^{\left(0\right)}$) and ( ${n}_{R}^{\left(t\right)} , {n}_{I}^{\left(t\right)}$) denote the refractive indexes of the fix and modulation regions, respectively. For simplicity, the present invention omits the reference input in the description. In practice, the system is designed for target *T* and associated quantitative loss function is denoted as *L.* The gradient with respect to a complex refractive index $n = {n}_{R}^{\left(t\right)} + {in}_{I}^{\left(t\right)}$ is $\frac{\partial L}{\partial n} = - \frac{2 Δd}{λ} conj \left(j\left(M⋅\left(x+B\right)⋅\left({W}^{T}\frac{\partial L}{\partial y}\right)\right)\right.$

The gradients of the input system and the reference system are $\frac{\partial L}{\partial x} = \frac{\partial L}{\partial B} = M ⋅ \left({W}^{T}\frac{\partial L}{\partial y}\right)$

In this way, the gradients of all parameters in the system may be retrieved and designed through gradient descent.

For a multilayer parametric optical system, the present invention will describe a gradient descent algorithm for the system. Re-expressing a propagation matrix W of a k-th linear optical layer in the above expression as a Green's function *Gₖ*(*rₒ, rᵢ*), the forward propagation may be expressed as follows: ${y}_{k} \left({r}_{o}\right) = \int {G}_{k} \left({r}_{o}, {r}_{i}\right) {x}_{k} \left({r}_{i}\right) d \left({r}_{i}\right)$

The output may be non-linearly activated and fed into a subsequent layer xₖ₊₁ *=* f(yₖ) . A quality factor is evaluated based on the final output, *L = Ψ*(*y_{N}, T*), where *T* is the target output. To efficiently evaluate the loss, the gradient is computed using the loss function *L.* The gradient *y_{N}* is: ${δy}_{N} = \frac{\partial L}{\partial {y}_{N}} = {Ψ}_{x}^{′} \left({y}_{N}, T\right)$

According to the chain rule, the gradient propagates is: ${δ}_{{x}_{k}} \left({r}_{i}\right) = \int {δ}_{{y}_{k}} \left({r}_{o}\right) \frac{\partial {y}_{k} \left({r}_{0}\right)}{\partial {x}_{k} \left({r}_{i}\right)} d \left({r}_{o}\right) = \int {G}_{k} \left({r}_{o}, {r}_{i}\right) {δ}_{y} \left({r}_{o}\right) d \left({r}_{o}\right)$

According to the Lorentz reciprocity, *Gₖ*(*rₒ*, *rᵢ*) *= Gₖ*(*rᵢ, rₒ*) , which makes, ${δ}_{{x}_{k}} \left({r}_{i}\right) = \int {G}_{k} \left({r}_{i}, {r}_{o}\right) {δ}_{y} \left({r}_{o}\right) d \left({r}_{o}\right)$

This corresponds to the propagation of field δ_{y} from the output of layer k to the input of layer k.

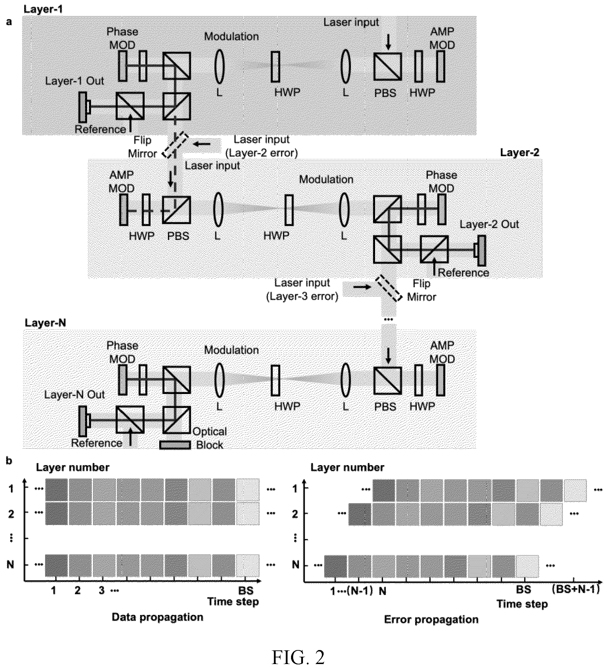

As shown in FIG. 2, the method for online training is applied to the free space system for experiments according to an embodiment of the present invention.

Specifically, in the free space system, a source for the optical calculation is generated using a solid-state laser (MFL-FN-532) operating at 532nm.Coherent optical wavefront is expanded using a beam expander and then is split into two paths by a beam splitter (BS013, Thorlabs). One path points to a spatial light modulator (SLM) for data/error complex field loading, while the other path is used as an interfering light beam whose light intensity is attenuated by two polarizers (LPNIR100-MP2, Thorlabs). The SLM (X15213-01, HAMAMATSU) for field loading is configured to operate in amplitude modulation mode, which consists of 1280×1024 modulation elements with a pitch of 12.5µm, and a programmed depth of 8 bits. The spatial light modulator may modulate an incident light at up to 60Hz. The amplitude-modulated light field is then relayed 1:1 to another SLM (E-series, meadowlark) through a 4F system for phase modulation. After polarization adjustment with a half-wave sheet, passing the second path light beam through the half-wave sheet and a linear polarizer. The phase modulation SLM is a reflective silicon-based liquid crystal component with up to 91% zero-level diffraction efficiency, contains 1920 × 1200 modulation cells, each with a size of 8µm and 8-bit precision. The phase modulation SLM has a maximum frame rate of 60Hz and an update time of 17ms, which is suitable for both electric field loading and design phase loading. The wavefront carries the input light field and design phase, and then a detecting symmetric propagation system is used to perform a specific task. The output light beam are measured by two separate sensors before propagating a length of 0.388m. A CMOS sensor (BFS-U3-89S6M, Flir) is used to measure the complex field with good quantum efficiency (63.99%) and low dark noise (2.47e-). Two sensors are used to measure the amplitude and phase of the results separately. The CMOS sensor achieves a maximum frame rate of 42 Hz with a pixel setting of 4096×2160, where each pixel size is 3.45µm and the readout value is configured to 8 bits. For the free space system, each propagation takes the same time regardless of the complexity of the system. The commercial spatial light modulator can be faster than 1kHz (HSP1K-488- 800-PC8, Meadowlark Optics), so the propagation time is less than 2.0ms per iteration.

The method for online training of intelligent optical computing of the embodiments of the present invention avoids the complex backpropagation process and improves the efficiency and stability of the training. The optical training is executed on a specific physical system to accomplish the training process of the optical network in an efficient way. The system is capable of training the deep photonic neural network with millions of parameters online, as well as handling the optical imaging system in complex scenes. The online training method dramatically increases the training speed and achieves highly accurate training results under resource-constrained conditions.

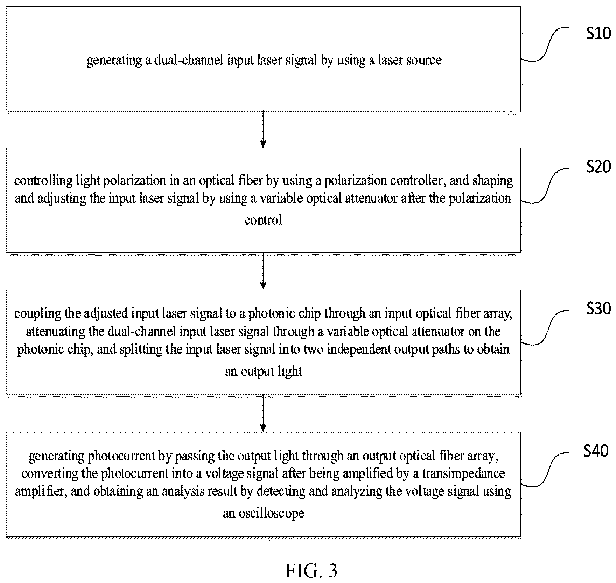

FIG. 3 is a method for online training of intelligent optical computing. The method is applied to an integrated photonic chip system, and includes:
S10, generating a dual-channel input laser signal by using a laser source;
S20, controlling light polarization in an optical fiber by using a polarization controller, and shaping and adjusting the input laser signal by using a variable optical attenuator after the polarization control;
S30, coupling the adjusted input laser signal to a photonic chip through an input optical fiber array, attenuating the dual-channel input laser signal through a variable optical attenuator on the photonic chip, and splitting the input laser signal into two independent output paths to obtain an output light; and
S40, generating photocurrent by passing the output light through an output optical fiber array, converting the photocurrent into a voltage signal after being amplified by a transimpedance amplifier, and obtaining an analysis result by detecting and analyzing the voltage signal using an oscilloscope.

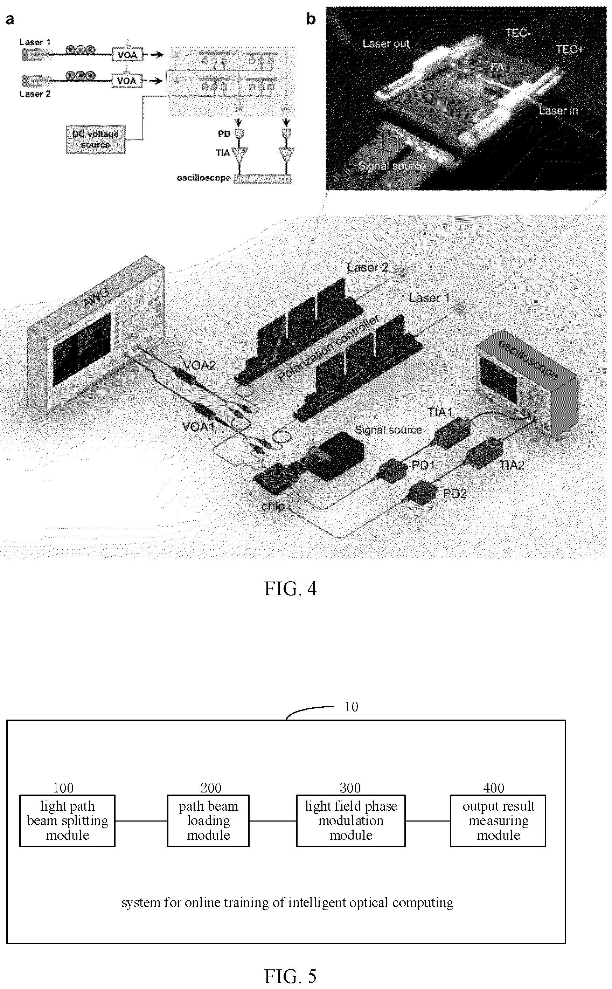

Specifically, FIG. 4 shows an integrated photonic chip system according to an embodiment of the present invention, in which the chip is produced in a silicon photonic foundry. The chip integrates various components, such as a passive grating coupler, a waveguide, and a multimode interferometer, which are fabricated on a silicon on insulator (SOI) platform using a standard etching process.

Specifically, two laser sources with 10mW of power are used in the system to generate a dual-channel input. One laser operates at a precise wavelength of 1550nm, while the other laser operates at a precise wavelength of 1551nm. A polarization controller is used to control the polarization of light within the fiber to ensure that the desired polarization is achieved. After polarization control, a variable optical attenuator (V1550A, Thorlabs) is used to shape and adjust the input signal. The output of the variable optical attenuator is then optically coupled to the photonic chip through an input fiber array. On the chip, four variable optical attenuators (VOAs) attenuate the dual-channel input light, and the the dual-channel input light is split into two separate output paths. The attenuated light is then detected by a photodiode (DET01CFC, Thorlabs) on the chip. The output light passes through the output optical fiber array, and the generated photocurrent is amplified by a transimpedance amplifier (TIA, AMP100, Thorlabs) and is converted into the voltage signal, and finally the dual-channel output is detected and analyzed by an oscilloscope. Additionally, an eight-channel fiber array with an angle of 8° is used to guide the light in and out of the photonic chip. After aligning the fiber arrays with the grating array under a microscope with the help of a nano electric translation stage, the vertically coupled fiber arrays are connected and fixed to the PIC using a curable epoxy resin. A measured insertion loss of the fiber-to-chip coupling after encapsulation is approximately -8dB per channel. A two-layer dedicated PCB is used for on-chip electrical signal feed. A pad on a sheet of a VOA array with a period of 100µm is bonded and connected to the PCB board through a gold wire, and the sheet of the VOA array is independently routed to an electrical socket through a signal line with a period of 800µm. A customized multi-channel DC signal source is connected to the board, and the injection current of the VOA is controlled by setting a voltage 0-5V, the imaginary part of the effective refraction of the guided mode wave is effectively regulated. To achieve thermal stability, a photonic chip core and a thermistor is mounted on a copper block using a thermal adhesive, a temperature of the chip is measured using the thermistor, a thermoelectric temperature controller (TEC) is connected to the copper block to cool the package system, and a proportional-integrated-derivative (PID) feedback loop is established between the thermistor and the thermoelectric temperature controller. This feedback loop maintains the on-chip temperature within ±0.004Kelvin (equivalent to ±2Ω thermistor long-term stability), ensuring reliable and consistent operation.

It is known that most of the training operations in different optical systems are implemented experimentally online. The present invention explains how the remaining operations may be performed in the field. Both loss calculations and gradient calculations may be implemented by on-site optical or electronic devices. The loss calculation involves a minus operation, which can be realized by a π phase shift (equivalent to a -1 value in the complex representation of light), and for an interference calculation, a difference between the output y and the target T is calculated, e = y - T.

The gradient of the parameter g ∝ (Re{1jE_{data}Eₑᵣᵣₒᵣ} - Im{1jE_{data}Eₑᵣᵣₒᵣ}). Thus the gradient calculation involves computing the real and imaginary parts of the field E_{data}Eₑᵣᵣₒᵣ. In order to calculate Re{1jE_{data}Eₑᵣᵣₒᵣ}, intensities of the three fields require to be detected: $A = {\left|{E}_{data}^{∗}+1{jE}_{error}\right|}^{2}$, B = |E_{data}|², and C = |Eₑᵣᵣₒᵣ|² , and the sum of the gradient is Re{1jE_{data}Eₑᵣᵣₒᵣ} *=* (A - B - C)/2, where the phase conjugation may be realized through a phase conjugate mirror, and the difference operation may be realized by balanced photoelectric detection. Similarly, the intensity $A ′ = {\left|{E}_{data}^{∗}+{E}_{error}\right|}^{2}$ may be measured. Then the present invention has Im{1jE_{data}Eₑᵣᵣₒᵣ} = (A' - B - C)/2. The detected gradient signal will be further accumulated by an integration circuit to determine the modulator and tune the refractive index. The gradient may also be used to directly update the refractive index of the non-volatile optical material.

According to the method for online training of intelligent optical computing of the present invention, compared to physical artificial intelligence methods designed offline that are inevitably imperfect due to the prevailing noise and general uncertainty in the nature of physics, the online machine learning method proposed in the present invention alleviates the limitations of numerical modeling and achieves high-performance general optical artificial intelligence and optical artificial intelligence, and experimentally demonstrates the method for online training of an integrated photonic chip system, which performs the optical training on the specific physical system and completes the training process of the optical network in an efficient way.

To implement the above embodiments, as shown in FIG. 5, an embodiment of the present invention also provides a system 10 for online training of intelligent optical computing. The system includes:
a light path beam splitting module 100, configured to generate coherent light of a predefined wavelength by using a solid state laser, and expand coherent light wavefront by using a beam expander, and split the coherent light wavefront into a first path light beam and a second path light beam by using a beam splitter;
a path beam loading module 200, configured to input the first path light beam into a first spatial light modulator for data/error complex field loading and take the second path light beam as an interfering light beam, wherein the first spatial light modulator for field loading is configured to operate in an amplitude modulation mode;
a light field phase modulation module 300, configured to relay the amplitude-modulated light field to a second spatial light modulator through a 4F system for phase modulation, and obtain an output light beam by passing the second path light beam through a half-wave plate and linear polarizer after polarization adjustment using the half-wave plate;
an output result measuring module 400, configured to determine an amplitude and a phase of a beam measurement result by measuring the output light beam using a detecting symmetric propagation system.

According to the system for online training of intelligent optical computing of the embodiments of the present invention, the complex backpropagation process can be avoided and the efficiency and stability of the training can be improved. The optical training is executed on the specific physical system to accomplish the training process of the optical network in an efficient way. The system is capable of training deep photonic neural networks with millions of parameters online, as well as handling optical imaging systems in complex scenes. The online training approach dramatically increases the training speed and achieves highly accurate training results under resource-constrained conditions.

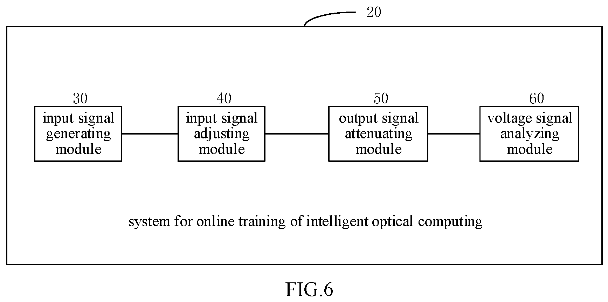

To implement the above embodiment, as shown in FIG. 6, an embodiment of the present invention also provides a system 20 for online training of intelligent optical computing. The system 20 includes:
an input signal generating module 30, configured to generate a dual-channel input laser signal by using a laser source;
an input signal adjusting module 40, configured to control light polarization in an optical fiber by using a polarization controller, and shape and adjust the input laser signal by using a variable optical attenuator after the polarization control;
an output signal attenuating module 50, configured to couple the adjusted input laser signal to a photonic chip through an input optical fiber array, attenuate the dual-channel input laser signal through a variable optical attenuator on the photonic chip, and split the input laser signal into two independent output paths to obtain an output light; and
a voltage signal analyzing module 60, configured to generate photocurrent by passing the output light through an output optical fiber array, converting the photocurrent into a voltage signal after being amplified by a transimpedance amplifier, and obtain an analysis result by detecting and analyzing the voltage signal using an oscilloscope.

According to the system for online training of intelligent optical computing of the present invention, compared to physical artificial intelligence methods designed offline that are inevitably imperfect due to the prevailing noise and general uncertainty in the nature of physics, the online machine learning method proposed in the present invention alleviates the limitations of numerical modeling and achieves high-performance general optical artificial intelligence and optical artificial intelligence, and experimentally demonstrates the online training method for the integrated photonic chip system, which performs the optical training on the specific physical system and completes the training process of the optical network in an efficient way.

In the description of the specification, reference to the terms "an embodiment," "some embodiments," "an example," "a particular example," or "some examples" or the like means that a particular feature, structure, material, or characteristic described in connection with the embodiment or example is included in at least one embodiment or example of the present invention. In the specification, illustrative expressions of such terms are not necessarily directed to the same embodiment or example. Furthermore, the particular feature, structure, material, or characteristic described may be combined in any suitable manner in any one or more embodiments or examples. Furthermore, the different embodiments or examples and the features of the different embodiments or examples described in the specification may be combined by those skilled in the art without contradiction.

Furthermore, the terms "first" and "second" are used for descriptive purposes only and are not to be understood as indicating or implying relative importance or as implying a number of indicated technical features. Thus, a feature defined with "first" and "second" may explicitly or implicitly include at least one such feature. In the description of the present invention, "a plurality of" means at least two, e.g., two, three, etc., unless explicitly specifically defined otherwise.

## Claims

1. A method for online training of intelligent optical computing, applied to a free space system, comprising:
generating coherent light of a predefined wavelength by using a solid state laser, and expanding coherent light wavefront by using a beam expander, and splitting the coherent light wavefront into a first path light beam and a second path light beam by using a beam splitter (S1);
inputting the first path light beam into a first spatial light modulator for data/error complex field loading and taking the second path light beam as an interfering light beam, wherein the first spatial light modulator for field loading is configured to operate in an amplitude modulation mode (S2);
relaying the amplitude-modulated light field to a second spatial light modulator through a 4F system for phase modulation, and obtaining an output light beam by passing the second path light beam through a half-wave plate and linear polarizer after polarization adjustment using the half-wave plate (S3); and
determining an amplitude and a phase of a beam measurement result by measuring the output light beam using a detecting symmetric propagation system (S4).

2. The method according to claim 1, wherein the amplitude modulation mode is formed by 1280 × 1024 modulation elements with a pitch of 12.5µm, and a programming depth of 8 bits.

3. The method according to claim 1 or 2, wherein the second spatial light modulator comprises 1920 × 1200 modulation elements, each modulation element having a size of 8µm and an 8-bit precision, a maximum frame rate of the second spatial light modulator is 60Hz, and an update time of the second spatial light modulator is 17ms.

4. The method according to any one of claims 1 to 3, wherein the detecting symmetric propagation system comprises at least a complementary metal oxide semiconductor (CMOS) sensor, the CMOS sensor is configured to achieve a maximum frame rate of 42Hz, with a corresponding pixel set as 4096 × 2160, where each pixel has a size of 3.45 µm and a readout value configured as 8-bit.

5. A method for online training of intelligent optical computing, applied to an integrated photonics circuit system, comprising:
generating a dual-channel input laser signal by using a laser source (S10);
controlling light polarization in an optical fiber by using a polarization controller, and shaping and adjusting the input laser signal by using a variable optical attenuator after the polarization control (S20);
coupling the adjusted input laser signal to a photonic chip through an input optical fiber array, attenuating the dual-channel input laser signal through a variable optical attenuator on the photonic chip, and splitting the input laser signal into two independent output paths to obtain an output light (S30); and
generating photocurrent by passing the output light through an output optical fiber array, converting the photocurrent into a voltage signal after being amplified by a transimpedance amplifier, and obtaining an analysis result by detecting and analyzing the voltage signal using an oscilloscope (S40).

6. The method according to claim 5, further comprising:
aligning the input optical fiber array and the output optical fiber array respectively with a grating array, connecting and fixing the vertically coupled optical fiber arrays to an integrated circuit of a printed circuit board (PCB) using a curable epoxy resin; and
performing electrical signal feeding on the photonic chip through a two-layer PCB, bonding and connecting a pad on a sheet of a variable optical attenuator array with a period of 100µm to the PCB through a gold wire, and independently routing the sheet of the variable optical attenuator array to an electrical socket through a signal line with a period of 800µm.

7. The method according to claim 6, further comprising:
connecting a multi-channel direct current signal source to the PCB and controlling injection current of the variable optical attenuator by setting a voltage 0-5V, adjusting an imaginary portion of effective refraction of a guided mode wave.

8. The method according to any one of claims 5 to 7, further comprising:
mounting a photonic chip core and a thermistor on a copper block by using a thermal adhesive, measuring a temperature of the chip by using the thermistor, connecting a thermoelectric temperature controller to the copper block to cool a packaging system, and establishing a proportional-integral-derivative feedback loop between the thermistor and the thermoelectric temperature controller.

9. A system (10) for online training of intelligent optical computing, comprising:
a light path beam splitting module (100), configured to generate coherent light of a predefined wavelength by using a solid state laser, and expand coherent light wavefront by using a beam expander, and split the coherent light wavefront into a first path light beam and a second path light beam by using a beam splitter;
a path beam loading module (200), configured to input the first path light beam into a first spatial light modulator for data/error complex field loading and take the second path light beam as an interfering light beam, wherein the first spatial light modulator for field loading is configured to operate in an amplitude modulation mode;
a light field phase modulation module (300), configured to relay the amplitude-modulated light field to a second spatial light modulator through a 4F system for phase modulation, and obtain an output light beam by passing the second path light beam through a half-wave plate and linear polarizer after polarization adjustment using the half-wave plate; and
an output result measuring module (400), configured to determine an amplitude and a phase of a beam measurement result by measuring the output light beam using a detecting symmetric propagation system.

10. A system (20) for online training of intelligent optical computing, comprising:
an input signal generating module (30), configured to generate a dual-channel input laser signal by using a laser source;
an input signal adjusting module (40), configured to control light polarization in an optical fiber by using a polarization controller, and shape and adjust the input laser signal by using a variable optical attenuator after the polarization control;
an output signal attenuating module (50), configured to couple the adjusted input laser signal to a photonic chip through an input optical fiber array, attenuate the dual-channel input laser signal through a variable optical attenuator on the photonic chip, and split the input laser signal into two independent output paths to obtain an output light; and
a voltage signal analyzing module (60), configured to generate photocurrent by passing the output light through an output optical fiber array, convert the photocurrent into a voltage signal after being amplified by a transimpedance amplifier, and obtain an analysis result by detecting and analyzing the voltage signal using an oscilloscope.

## Patentansprüche

1. Verfahren zum Online-Training von intelligentem optischem Berechnen, das auf ein Freiraumsystem angewendet wird, umfassend:
Erzeugen von kohärentem Licht einer vordefinierten Wellenlänge durch Verwendung eines Festkörperlasers, und Aufweiten der Wellenfront von kohärentem Licht durch Verwendung eines Strahlaufweiters, und Aufspalten der Wellenfront von kohärentem Licht in einen Lichtstrahl des ersten Pfads und einen Lichtstrahl des zweiten Pfads durch Verwendung eines Strahlenteilers (S1);
Eingeben des Lichtstrahls des ersten Pfads in einen ersten räumlichen Lichtmodulator für Daten/Fehlerkomplex-Feldladen und Nehmen des Lichtstrahls des zweiten Pfads als störenden Lichtstrahl, worin der erste räumliche Lichtmodulator für Feldladen dazu konfiguriert ist, in einem Amplitudenmodulationsmodus (S2) zu arbeiten;
Weiterleiten des amplitudenmodulierten Lichtfeldes an einen zweiten räumlichen Lichtmodulator über ein 4F-System für Phasenmodulation, und Erhalten eines Ausgabe-Lichtstrahls durch Passieren des Lichtstrahls des zweiten Pfads durch eine Halbwelle-Platte und linearen Polarisator nach Polarisationseinstellung unter Verwendung der Halbwelle-Platte (S3); und
Bestimmen einer Amplitude und einer Phase eines Strahlmessungsergebnisses durch Messen des Ausgabe-Lichtstrahls unter Verwendung eines detektierenden symmetrischen Ausbreitungssystems (S4).

2. Verfahren nach Anspruch 1, worin der Amplitudenmodulationsmodus von 1280 × 1024 Modulationselementen mit einer Höhe von 12.5µm, und einer Programmiertiefe von 8 Bits gebildet ist.

3. Verfahren nach Anspruch 1 oder 2, worin der zweite räumliche Lichtmodulator 1920 × 1200 Modulationselemente umfasst, jedes Modulationselement eine Größe von 8µm und eine 8-Bit-Präzision hat, eine höchste Bildrate des zweiten räumlichen Lichtmodulators 60Hz ist, und eine Aktualisierungszeit des zweiten räumlichen Lichtmodulators 17ms ist.

4. Verfahren nach einem der Ansprüche 1 bis 3, worin das detektierende symmetrische Ausbreitungssystem zumindest einen komplementären Metalloxid-Halbleiter (CMOS)-Sensor umfasst, der CMOS-Sensor dazu konfiguriert ist, eine höchste Bildrate von 42Hz zu erhalten, mit einem entsprechenden Pixelsatz als 4096 × 2160, worin jeder Pixel eine Größe von 3.45µm und einen Auslesewert, der als 8-Bit konfiguriert ist, hat.

5. Verfahren zum Online-Training von intelligentem optischem Berechnen, das auf ein integriertes Photonikschaltungssystem angewendet wird, umfassend:
Erzeugen eines Doppelkanaleingabelasersignals durch Verwendung einer Laserquelle (S10);
Steuern von Lichtpolarisation in einer optischen Faser durch Verwendung eines Polarisationsreglers, und Formen und Einstellen des Eingabe-Lasersignals durch Verwendung eines variablen optischen Dämpfungsglieds nach der Polarisationssteuerung (S20);
Koppeln des eingestellten Eingabe-Lasersignals mit einem photonischen Chip über ein Eingabe-Lichtleiterarray, Dämpfen des Doppelkanaleingabelasersignals über ein variables optisches Dämpfungsglied auf dem photonischen Chip, und Aufspalten des Eingabelasersignals in zwei unabhängige Ausgabepfade, um ein Ausgabelicht zu erhalten (S30); und
Erzeugen von Photostrom durch Passieren des Ausgabelichts durch ein Ausgabe-Lichtleiterarray, Umwandeln des Photostroms in ein Spannungssignal, nachdem er von einem Transimpedanzverstärker verstärkt wurde, und Erhalten eines Analyseergebnisses durch Detektieren und Analysieren des Spannungssignals unter Verwendung eines Oszilloskops (S40).

6. Verfahren nach Anspruch 5, ferner umfassend:
Ausrichten des Eingabe-Lichtleiterarrays und des Ausgabe-Lichtleiterarrays jeweils zu einem Gitterarray, Verbinden und Fixieren der vertikal gekoppelten Lichtleiterarrays an einer integrierten Schaltung einer Leiterplatte (PCB) unter Verwendung eines härtbaren Epoxidharzes; und
Durchführen von elektrischer Signaleinspeisung auf dem photonischen Chip durch eine zweilagige PCB, Bonden und Verbinden eines Pads auf einem Blatt eines variablen optischen Dämpfungsgliedarrays mit einer Periodendauer von 100µm auf der PCB über einen Golddraht, und unabhängiges Routing des Blattes des variablen optischen Dämpfungsgliedarrays zu einer elektrischen Steckdose durch eine Signalleitung mit einer Periodendauer von 800µm.

7. Verfahren nach Anspruch 6, ferner umfassend:
Verbinden einer Mehrkanalgleichstromsignalquelle mit der PCB und Regeln von Injektionsstrom des variablen optischen Dämpfungsglieds durch Setzen einer Spannung von 0-5 V, Einstellen eines imaginären Abschnitts von effektiver Brechung einer Welle im geführten Modus.

8. Verfahren nach einem der Ansprüche 5 bis 7, ferner umfassend:
Montieren eines photonischen Chipkerns und eines Thermistors auf einem Kupferblock durch Verwendung eines Wärmeleitklebers, Messen einer Temperatur des Chips durch Verwendung des Thermistors, Verbinden eines thermoelektrischen Temperaturreglers mit dem Kupferblock, um ein Verpackungssystem abzukühlen, und Festlegen einer proportional-integral-derivativen Rückführschleife zwischen dem Thermistor und dem thermoelektrischen Temperaturregler.

9. System (10) zum Online-Training von intelligentem optischem Berechnen, umfassend:
ein Lichtwegstrahlteilungsmodul (100), das dazu eingerichtet ist, kohärentes Licht einer vordefinierten Wellenlänge durch Verwendung eines Festkörperlasers zu erzeugen, und Wellenfront von kohärentem Licht durch Verwendung eines Strahlaufweiters aufzuweiten, und die Wellenfront von kohärentem Licht in einen Lichtstrahl des ersten Pfads und einen Lichtstrahl des zweiten Pfads durch Verwendung eines Strahlenteilers aufzuspalten;
ein Pfadstrahllademodul (200), das dazu eingerichtet ist, den Lichtstrahl des ersten Pfads in einen ersten räumlichen Lichtmodulator für Daten/Fehlerkomplex-Feldladen einzugeben und den Lichtstrahl des zweiten Pfads als störenden Lichtstrahl zu nehmen, worin der erste räumliche Lichtmodulator für Feldladen dazu konfiguriert ist, in einem Amplitudenmodulationsmodus zu arbeiten;
ein Lichtfeld-Phasenmodulationsmodul (300), das dazu eingerichtet ist, das amplitudenmodulierte Lichtfeld an einen zweiten räumlichen Lichtmodulator über ein 4F-System für Phasenmodulation weiterzuleiten, und einen Ausgabe-Lichtstrahl durch Passieren des Lichtstrahls des zweiten Pfads durch eine Halbwelle-Platte und linearen Polarisator nach Polarisationseinstellung unter Verwendung der Halbwelle-Platte zu erhalten; und
ein Ausgabeergebnismessmodul (400), das dazu eingerichtet ist, eine Amplitude und eine Phase eines Strahlmessungsergebnisses durch Messen des Ausgabe-Lichtstrahls unter Verwendung eines detektierenden symmetrischen Ausbreitungssystems zu bestimmen.

10. System (20) zum Online-Training von intelligentem optischem Berechnen, umfassend:
ein Eingabesignalerzeugungsmodul (30), das dazu eingerichtet ist, ein Doppelkanaleingabelasersignal durch Verwendung einer Laserquelle zu erzeugen;
ein Eingabesignaleinstellungsmodul (40), das dazu eingerichtet ist, Lichtpolarisation in einer optischen Faser durch Verwendung eines Polarisationsreglers zu steuern, und das Eingabe-Lasersignal durch Verwendung eines variablen optischen Dämpfungsglieds nach der Polarisationssteuerung zu formen und einzustellen;
ein Ausgabesignaldämpfungsmodul (50), das dazu eingerichtet ist, das eingestellte Eingabe-Lasersignal mit einem photonischen Chip über ein Eingabe-Lichtleiterarray zu koppeln, das Doppelkanaleingabelasersignal über ein variables optisches Dämpfungsglied auf dem photonischen Chip zu dämpfen, und das Eingabelasersignal in zwei unabhängige Ausgabepfade aufzuspalten, um ein Ausgabelicht zu erhalten; und
ein Spannungssignalanalysiermodul (60), das dazu eingerichtet ist, Photostrom durch Passieren des Ausgabelichts durch ein Ausgabe-Lichtleiterarray zu erzeugen, den Photostrom in ein Spannungssignal umzuwandeln, nachdem er von einem Transimpedanzverstärker verstärkt wurde, und ein Analyseergebnis durch Detektieren und Analysieren des Spannungssignals unter Verwendung eines Oszilloskops zu erhalten.

## Revendications

1. Procédé d'apprentissage en ligne d'informatique optique intelligente, appliqué à un système d'espace libre, comprenant :
la génération d'une lumière cohérente d'une longueur d'onde prédéfinie en utilisant un laser à semi-conducteurs, et la dilatation d'un front d'onde de lumière cohérente en utilisant un dilatateur de faisceau, et la séparation du front d'onde de lumière cohérente en un premier faisceau lumineux de trajet et un second faisceau lumineux de trajet en utilisant un séparateur de faisceau (S1) ;
l'entrée du premier faisceau lumineux de trajet dans un premier modulateur spatial de lumière pour le chargement de champ complexe de données/d'erreurs et la prise du second faisceau lumineux de trajet comme faisceau lumineux d'interférence, dans lequel le premier modulateur spatial de lumière pour le chargement de champ est configuré pour fonctionner dans un mode de modulation d'amplitude (S2) ;
le fait de relayer le champ lumineux modulé en amplitude vers un second modulateur spatial de lumière par l'intermédiaire d'un système 4F pour modulation de phase, et l'obtention d'un faisceau lumineux de sortie en faisant passer le second faisceau lumineux de trajet à travers une lame demi-onde et un polariseur linéaire après ajustement de polarisation à l'aide de la lame demi-onde (S3) ; et
la détermination d'une amplitude et d'une phase d'un résultat de mesure de faisceau en mesurant le faisceau lumineux de sortie à l'aide d'un système de propagation symétrique de détection (S4).

2. Procédé selon la revendication 1, dans lequel le mode de modulation d'amplitude est formé par des éléments de modulation 1280 × 1024 avec un pas de 12.5µm et une profondeur de programmation de 8 bits.

3. Procédé selon la revendication 1 ou 2, dans lequel le second modulateur spatial de lumière comprend des éléments de modulation 1920 × 1200, chaque élément de modulation ayant une taille de 8µm et une précision de 8 bits, une fréquence d'images maximale du second modulateur spatial de lumière est de 60Hz, et un temps de mise à jour du second modulateur spatial de lumière est de 17ms.

4. Procédé selon l'une quelconque des revendications 1 à 3, dans lequel le système de propagation symétrique de détection comprend au moins un capteur à semi-conducteur complémentaire à l'oxyde métallique (CMOS), le capteur CMOS est configuré pour atteindre une fréquence d'images maximale de 42Hz, avec un pixel correspondant défini sur 4096 × 2160, où chaque pixel a une taille de 3.45µm et une valeur de lecture configurée sur 8 bits.

5. Procédé d'apprentissage en ligne d'informatique optique intelligente, appliqué à un système de circuit photonique intégré, comprenant :
la génération d'un signal laser d'entrée à double canal en utilisant une source laser (S10) ;
la commande de la polarisation de lumière dans une fibre optique en utilisant un dispositif de commande de polarisation, et la mise en forme et l'ajustement du signal laser d'entrée en utilisant un atténuateur optique variable après la commande de polarisation (S20) ;
le couplage du signal laser d'entrée ajusté à une puce photonique par l'intermédiaire d'un réseau de fibres optiques d'entrée, l'atténuation du signal laser d'entrée à double canal par l'intermédiaire d'un atténuateur optique variable sur la puce photonique, et la séparation du signal laser d'entrée en deux trajets de sortie indépendants pour obtenir une lumière de sortie (S30) ; et
la génération d'un photocourant en faisant passer la lumière de sortie à travers un réseau de fibres optiques de sortie, la conversion du photocourant en un signal de tension après avoir été amplifié par un amplificateur à transimpédance, et l'obtention d'un résultat d'analyse en détectant et en analysant le signal de tension à l'aide d'un oscilloscope (S40).

6. Procédé selon la revendication 5, comprenant en outre :
l'alignement du réseau de fibres optiques d'entrée et du réseau de fibres optiques de sortie respectivement avec un réseau de diffraction, la connexion et la fixation des réseaux de fibres optiques couplés verticalement à un circuit intégré d'une carte de circuit imprimé (PCB) à l'aide d'une résine époxy durcissable ; et
la réalisation d'une alimentation en signal électrique sur la puce photonique à travers un PCB à deux couches, le collage et la connexion d'un plot sur une feuille d'un réseau d'atténuateurs optiques variables avec une période de 100µm au PCB à travers un fil d'or, et l'acheminement indépendant de la feuille du réseau d'atténuateurs optiques variables vers une prise électrique à travers une ligne de signal avec une période de 800µm.

7. Procédé selon la revendication 6, comprenant en outre :
la connexion d'une source de signal de courant continu multicanal au PCB et la commande du courant d'injection de l'atténuateur optique variable en réglant une tension de 0 à 5 V, en ajustant une partie imaginaire de la réfraction effective d'une onde en mode guidé.

8. Procédé selon l'une quelconque des revendications 5 à 7, comprenant en outre :
le montage d'un noyau de puce photonique et d'une thermistance sur un bloc de cuivre à l'aide d'un adhésif thermique, la mesure d'une température de la puce à l'aide de la thermistance, la connexion d'un dispositif de commande de température thermoélectrique au bloc de cuivre pour refroidir un système d'emballage, et l'établissement d'une boucle de rétroaction proportionnelle-intégrale-dérivée entre la thermistance et le dispositif de commande de température thermoélectrique.

9. Système (10) d'apprentissage en ligne d'informatique optique intelligente, comprenant :
un module de séparation de faisceau de trajet lumineux (100), configuré pour générer une lumière cohérente d'une longueur d'onde prédéfinie en utilisant un laser à semi-conducteurs, et dilater le front d'onde de lumière cohérente en utilisant un dilatateur de faisceau, et séparer le front d'onde de lumière cohérente en un premier faisceau lumineux de trajet et un second faisceau lumineux de trajet en utilisant un séparateur de faisceau ;
un module de chargement de faisceau de trajet (200), configuré pour entrer le premier faisceau lumineux de trajet dans un premier modulateur spatial de lumière pour le chargement de champ complexe de données/erreurs et prendre le second faisceau lumineux de trajet comme faisceau lumineux d'interférence, dans lequel le premier modulateur spatial de lumière pour le chargement de champ est configuré pour fonctionner dans un mode de modulation d'amplitude ;
un module de modulation de phase de champ lumineux (300), configuré pour relayer le champ lumineux modulé en amplitude vers un second modulateur de lumière spatial par l'intermédiaire d'un système 4F pour modulation de phase, et obtenir un faisceau lumineux de sortie en faisant passer le second faisceau lumineux de trajet à travers une plaque demi-onde et un polariseur linéaire après ajustement de polarisation à l'aide de la plaque demi-onde ; et
un module de mesure de résultat de sortie (400), configuré pour déterminer une amplitude et une phase d'un résultat de mesure de faisceau en mesurant le faisceau lumineux de sortie à l'aide d'un système de propagation symétrique de détection.

10. Système (20) d'apprentissage en ligne d'informatique optique intelligente, comprenant :
un module de génération de signal d'entrée (30), configuré pour générer un signal laser d'entrée à double canal en utilisant une source laser ;
un module d'ajustement de signal d'entrée (40), configuré pour commander une polarisation de la lumière dans une fibre optique en utilisant un dispositif de commande de polarisation, et mettre en forme et ajuster le signal laser d'entrée en utilisant un atténuateur optique variable après la commande de polarisation ;
un module d'atténuation de signal de sortie (50), configuré pour coupler le signal laser d'entrée ajusté à une puce photonique par l'intermédiaire d'un réseau de fibres optiques d'entrée, atténuer le signal laser d'entrée à double canal par l'intermédiaire d'un atténuateur optique variable sur la puce photonique, et séparer le signal laser d'entrée en deux trajets de sortie indépendants pour obtenir une lumière de sortie ; et
un module d'analyse de signal de tension (60), configuré pour générer un photocourant en faisant passer la lumière de sortie à travers un réseau de fibres optiques de sortie, convertir le photocourant en un signal de tension après avoir été amplifié par un amplificateur de transimpédance, et obtenir un résultat d'analyse en détectant et en analysant le signal de tension à l'aide d'un oscilloscope.
